Europäisches Patentamt

European Patent Office

Office européen des brevets

(11) Publication number: **0 308 545**
**A1**

## EUROPEAN PATENT APPLICATION

(21) Application number: **87201838.7**

(22) Date of filing: **25.09.87**

(51) Int. Cl.⁴: **A01G 9/24 , A01G 25/16**

(43) Date of publication of application:
**29.03.89 Bulletin 89/13**

(84) Designated Contracting States:
**AT BE CH DE ES FR GB GR IT LI LU NL SE**

(71) Applicant: **Vogels, Augustinus Gerardus Maria**
**Thorbeckestraat 2**
**Naaldwijk(NL)**

(72) Inventor: **Vogels, Augustinus Gerardus Maria.**
**Thorbeckestraat 2**
**Naaldwijk(NL)**

(74) Representative: **Smulders, Theodorus A.H.J. et al**
**Vereenigde Octrooibureaux Nieuwe Parklaan 107**
**NL-2587 BP 's-Gravenhage(NL)**

(54) **A method and an apparatus for automatically watering plants.**

(57) The present invention relates to a method of automatically watering plants arranged on a substrate to which liquid can be supplied by means of at least one valved supply conduit (37). At least one of the substrates is arranged in a receptacle communicating with a trough (3). The liquid supply takes place cyclically at timed intervals and in excess quantities. The quantity of liquid flowing from the trough (3) during a watering cycle is measured, while the time during which the valves remain open, after a "full" signal has been received is controlled in dependence on the measured excess of liquid flowing from the trough (3) during one or more of the preceding cycles. The present invention further relates to an apparatus for performing the above method. The apparatus comprises a measuring means (4) connected to the measuring opening (2), which means (4) is coupled to a control device (6) for controlling the valves depending on the measured quantities of fluid flowing through the opening (2).

FIG.1

## A method and an apparatus for automatically watering plants

This invention relates to a method of automatically watering plants arranged on a substrate to which liquid can be supplied by means of at least one valved supply conduit, at least one substrate being arranged in a receptacle communicating with a trough wherein feelers are provided which transmit a signal to a control device when given liquid levels are reached, with the watering taking place cyclically at timed intervals and in excess quantities and to an apparatus for automatically watering plants arranged on a substrate received in a receptacle, said apparatus having supply conduits fitted with valves, said receptacle communicating with a trough wherein feelers are provided that are coupled to a control device for controlling the liquid level in the trough and which is provided with an overflow opening.

For automatically watering plants devices are known of the type described, among other publications, in EP-C-140 143, wherein at least one substrate container is used as a regulating apparatus, so that the administration of liquid can always be adjusted to the effective liquid consumption. Variation between the thus controlled quantity of liquid to be administered per substrate container or group of substrate containers and the actually administered quantity of liquid, per substrate container or group of substrate containers is compensated for by administering a compensation quantity of liquid while excess liquid is discharged from each substrate container or group of substrate containers by overflowing. Furthermore, the overdose aims at washing away accumulations in the substrates of substances dissolved in the liquid. This redundant liquid cannot be re-used and this waste, consequently, should be minimized.

The conventional method has the drawback that the dose of the compensation quantity of liquid is controlled insufficiently. This is caused among other things in that the liquid exchange behaviour between the trough and the substrate of the regulating apparatus, which liquid exchange takes place usually by means of a capillary matting, is subject to change, so that the relation between the time the valves remain open after the "full" signal and the compensation quantity of liquid, eventually flowing away per watering cycle through the overflow opening, is disturbed.

It is an object of the present invention to better control the compensation quantity of liquid, while the regulating apparatus for determining the variation in the liquid consumption is maintained. To that effect, the present invention provides a method for automatically watering plants, which is characterized by measuring how much liquid flows out of the trough during a watering cycle and controlling the time the valves remain open, after a "full" signal has been received, depending on the measured excess of liquid flowing from the trough during one or more of the preceding cycles. The invention also provides an apparatus characterized in that the overflow opening connects to a measuring means coupled to the control device adapted to control the valves depending on the measured quantities of liquid flowing through the overflow opening.

In order that the measured data may be processed in a simple manner with a digital-electronic control device, it is advantageous when these data are presented in digital form. To that effect, a preferred embodiment of the present invention provides for the quantity of liquid flowing from the trough being measured in steps, so that the conversion of signals can be omitted.

For measuring the outflowing quantity of liquid, it is important that there is provided a reliable and inexpensive means that is resistant to the corrosive liquids with which substrate cultures are watered.

For this purpose, in one embodiment of an apparatus according to the present invention the measuring means comprises a reservoir containing at least one feeler coupled to the control device, and a siphon having a turning point and an inlet opening between which there is a given difference in height. There is thus provided a measuring means without moving parts, which can be made of conventional synthetic plastics components.

Since fertilized liquids in a conduit form a comparatively unstable meniscus, more unstable e.g. than that of tap water, there is no reliable and accurate start of the siphon section. When the meniscus is insufficiently stable, it cannot be maintained in the horiozontal part of the transition from the riser to the downcomer, and cannot be restored in the downcomer, respectively. As a result, the sucking action of the liquid column in the downcomer and hence the siphon action, fails. Besides, the accuracy of stopping the siphon action is adversely affected as liquid sometimes does and sometimes does not flow in during stopping.

A further embodiment of the present invention aims at removing the above problems. To that end, the invention provides a method in which the stepwise measurement is effected by siphoning a given quantity of liquid through two risers from two separated sections of a reservoir, the second reservoir section being filled by overflow from the first section to which the liquid is supplied first, the reservoir sections, risers and liquid supply openings being arranged in such a manner that the second section is siphoned off earlier than the first section and that the siphoning from the first section takes place at a higher speed than the supply of liquid thereto. It has been found experimentally that thus a better siphon action with a more constant quantity of liquid per siphoning step can be achieved. This is probably caused firstly by the better filling of the downcomer supporting meniscus formation therein. Secondly, the accuracy of stopping the siphon action is improved by being effected by air suction through the second reservoir section, to which, during stopping, no liquid is supplied. Stopping is thus not influenced by liquid flowing in or not flowing in at the moment of stopping.

The present invention further concerns an apparatus for applying this method, which apparatus is characterized in that the reservoir comprises a first and a second section separated by at least one partition, and an upper section adjoining said two sections and forming a connection therebetween, with a supply opening terminating in the first section and each of said sections containing inlet openings of risers which at a turning point, jointly terminate in a single downcomer. The levels at which the inlet openings are arranged define the respective under-sides of the reservoir sections, with the turning point having a higher level than the top of the separated sections and the assembly of sections, risers and inlet openings being arranged in such a manner that the second section will always be siphoned off earlier than the first section and that the discharge of liquid from the first section by siphoning is quicker than the supply of liquid to said section.

A preferred feature to achieve that the second reservoir section is siphoned off before the first section is that the first section has a larger volume than the second section or that the area of the smaller passage between the first section and the turning point of the siphon is smaller than the area of the smaller passage between the second section and the turning point of siphon.

A further simplified embodiment of the present invention, wherein the buffer reservoir is omitted, is characterized in that the mesuring means communicates via the overflow opening with the trough so that this functions itself as a buffer reservoir, for which purpose the overflow opening is located at a lower level than the turning point of the siphon, said turning point being disposed at a level corresponding with a given liquid level in the trough, so that the siphon action can only start when the liquid level in the trough exceeds the level at which the turning point is located. Buffering a temporary liquid excess is effected by a temporarily increased liquid level in the trough.

Some embodiments of the present invention will now be described, by way of example, with reference to the accompanying drawings, in which

Fig. 1 is a part-sectional side view of the regulating apparatus with measuring means;

Fig. 2 is a cross-sectional side view on a larger scale of the measuring means;

Fig. 3 is a view similar to Fig. 2, showing a further preferred embodiment of the measuring means;

Fig. 4 is a cross-sectional top view, taken on the line I-I of Fig. 5, and showing a further embodiment of the measuring means;

Fig. 5 is a cross-sectional side view taken on the line II-II of the embodiment of the measuring means shown in Fig. 5; and

Fig. 6 is a part-sectional view of still another embodiment of the measuring means and the end of the trough.

In the various figures of the drawings, corresponding parts are designated by identical reference numerals.

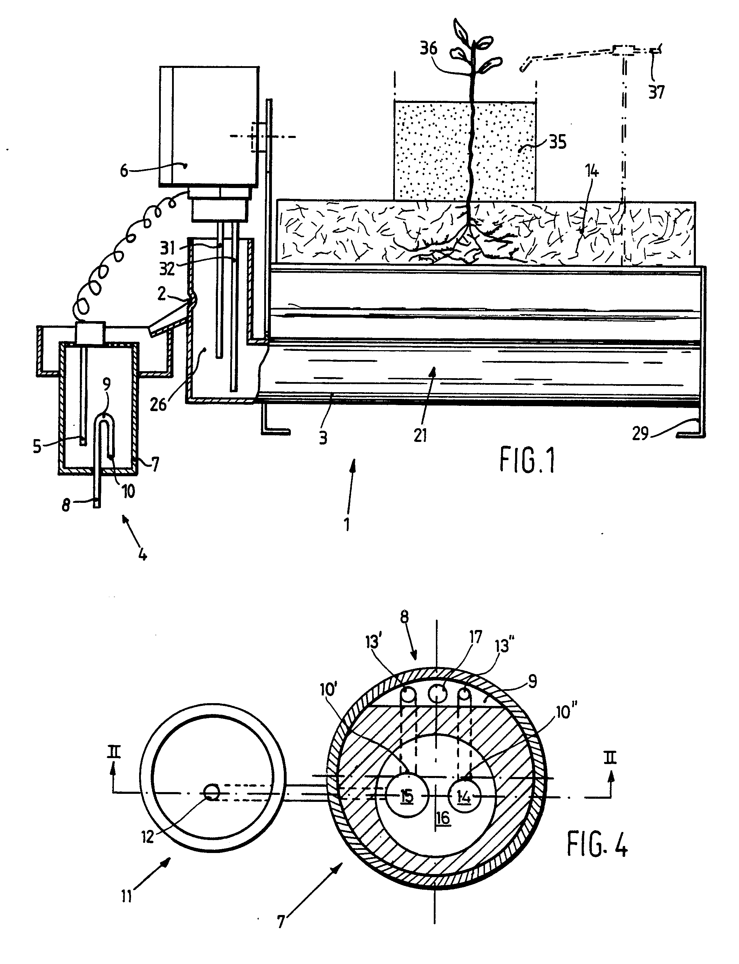

Fig. 1 shows the regulating apparatus, designated in its entirety by 1, for controlling the watering of plants, provided with a frame 29 mounting a receptacle 21 which is fitted at its bottom with a trough 3 extending along the length of the receptacle. Trough 3 is connected through a construction 23 to receptacle 21. Disposed on the bottom of the receptacle is a cotton matting, not shown, which is surrounded at least partly by a foil, likewise not shown. The matting is provided with a downwardly extending portion extending via constriction 3 into the bottom of trough 3. Trough 3 connects to the measuring portion 26 fitted with an overflow opening 2.

Further attached to frame 29 is a control device 6 having feelers 31, 32. Such a control device with feelers is known per se from Dutch patent application 70,06427 and the above Dutch patent application 77,04535. The feeler extends up to the level of trough 3 and indicates a minimum position. The electrode 32 extends into the bottom of the trough and indicates an alarm position.

Receptacle 21 contains on the cotton matting a mineral wool matting 14, also called substrate, surrounded by a foil, not shown, which is fitted at its top with an opening for placing thereon a plant pot 35 with a plant 36. Plant 36 can be watered via a diagrammatically shown liquid supply conduit 37 incorporating a valve, not shown, operated by the control device 6.

Fig. 1 further shows a measuring means 4 connecting to the overflow opening 23 and having feelers 5 communicating with control device 6.

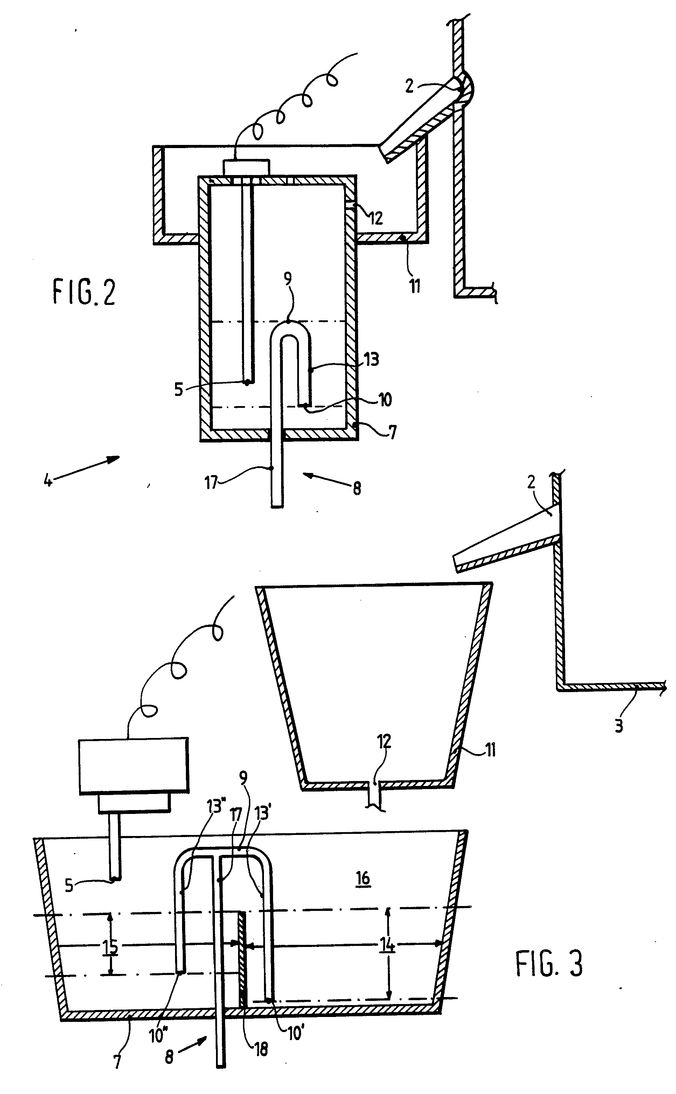

Measuring means 4 will be further explained with reference to Fig. 2. Reservoir 7 contains a siphon 8 provided with a turning point 9 being positioned higher than feeler 5, and an inlet 10 being positioned lower than said feeler. A special feature of the embodiment shown is that between measuring means 4 and overflow opening 2, there is provided a buffer reservoir communicating with reservoir 7 of the measuring means via a throttle opening 12.

The apparatus operates as follows. As soon as the liquid level in measuring section 26 falls below electrode 32, liquid is supplied through conduit 37. When trough 3 is filled, liquid flows to measuring means 4 through the overflow opening.

When the liquid flowing from overflow 2 through buffer reservoir 11 and throttle opening 12 into reservoir 7 reaches the feeler, a signal is transmitted by feeler 5 to control device 6. The first signal during a watering cycle forms the "full" signal. As soon as the liquid level reaches the level of the turning point 9, the siphon is actuated until the liquid level has fallen below inlet opening 10 and siphon 8 draws in air, thereby discontinuing the siphoning action, after which when liquid continues to be supplied the liquid level repeatedly rises again until siphon 8 is filled. Each time when the liquid level passes feeler 5, a counter signal is transmitted to control device 6. Each time when control device 6 receives the "full" signal, this closes the valve (not shown) of the regulating apparatus 1 immediately or after a given period of time. This interval is controlled depending on the number of counter signals received during (a) preceding watering cycle(s).

Control device 6 simultaneously also operates valves of supply conduits supplying liquid to the substrates, the dosing of which is ensured by the regulating apparatus. Redundant liquid from each substrate is always discharged through an overflow opening. These elements not associated with the regulating apparatus are entirely known per se and are not shown for the sake of brevity.

Buffer reservoir 11 communicating through throttle opening 12 with reservoir 7 ensures that, provided there is sufficient supply of liquid, a constant supply of a small quantity of liquid is maintained during emptying, as a result of which the relation between the quantity of liquid flowing away and the number of siphoning steps is not disturbed by the liquid supply per unit of time.

Fig. 3 shows a different preferred embodiment of the measuring means 4 in which reservoir 7 comprises two separated reservoir sections 14, 15, and an upper section 16, through which upper section the two reservoir sections are connected. In this example, the volume of the second reservoir section 15 is smaller than the first section 14, because the inlet opening 10″ of riser 13″ of siphon 8 connecting thereto is positioned at a higher level than inlet opening 10′, where riser 13′ connects to

the first section 14. Risers 13′, 13″ together terminate in downcomer 17 of siphon 8 adjacent turning point 9 of siphon 8. Buffer reservoir 11 is arranged between overflow opening 2 and reservoir 7, in the first section 14 of which throttle 12 terminates. Turning point 9 is located at a higher level than the level up to which partition 18 between the first section 14 and the second reservoir section extends. Feeler 5 is arranged at a level between turning point 9 and the said level up to which partition 18 extends.

The assembly shown in Fig. 3 ensures that liquid flowing from overflow opening 2 is received first in buffer reservoir 11, from which it flows through throttle opening 12 at a constant low speed into the first reservoir section 14. When this section 14 is full, the liquid then overflows into the second section 15. After both sections have been filled, the upper section is filled until the liquid level in reservoir 7 and hence the liquid level in the risers reaches the level of turning point 9, at which moment the liquid flows into downcomer 17, thereby starting the siphon action.

Due to the siphon action, the liquid level falls in reservoir 7, until the highest inlet opening 10″ draws in air first and the siphon action is discontinued. During the drawing-in of air, the liquid level has already fallen below the level up to which the partition 18 extends between the first and the second reservoir section, so that at that moment liquid is not supplied simultaneously to the second section.

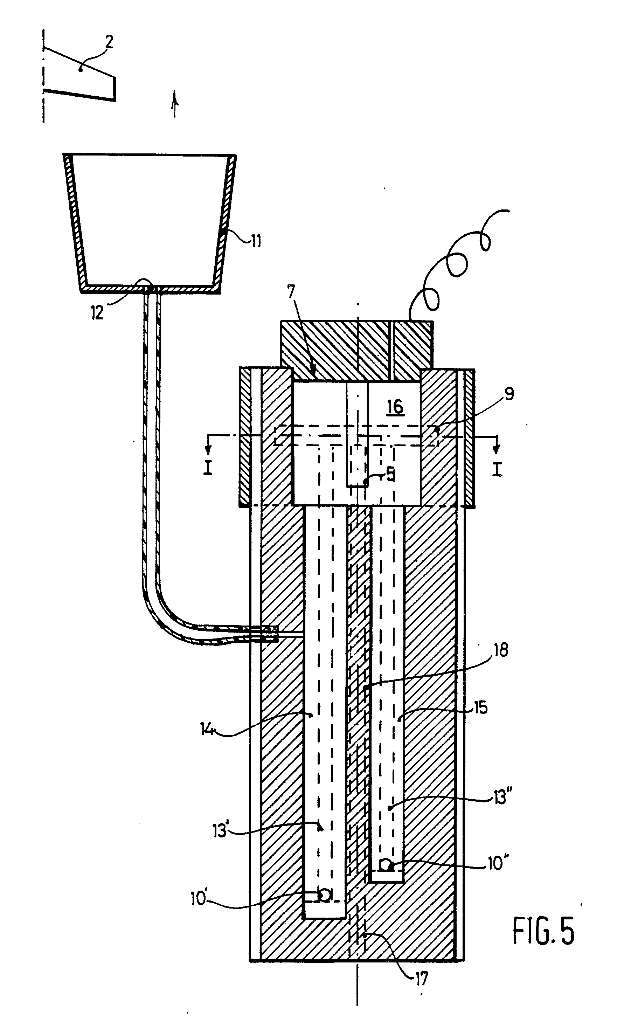

Figs. 4, 5 show a further embodiment of the present invention which is characterized in that measuring means 4 is a monolithic piece of synthetic plastics material integrating siphon 8 and the reservoir.

The construction of measuring means 4 with the liquid-containing and liquid-conducting elements in the form of bores again partly closed and recessed in a monolithic piece of plastics material provides a compact, robust member which can be manufactured even in small series at low cost.

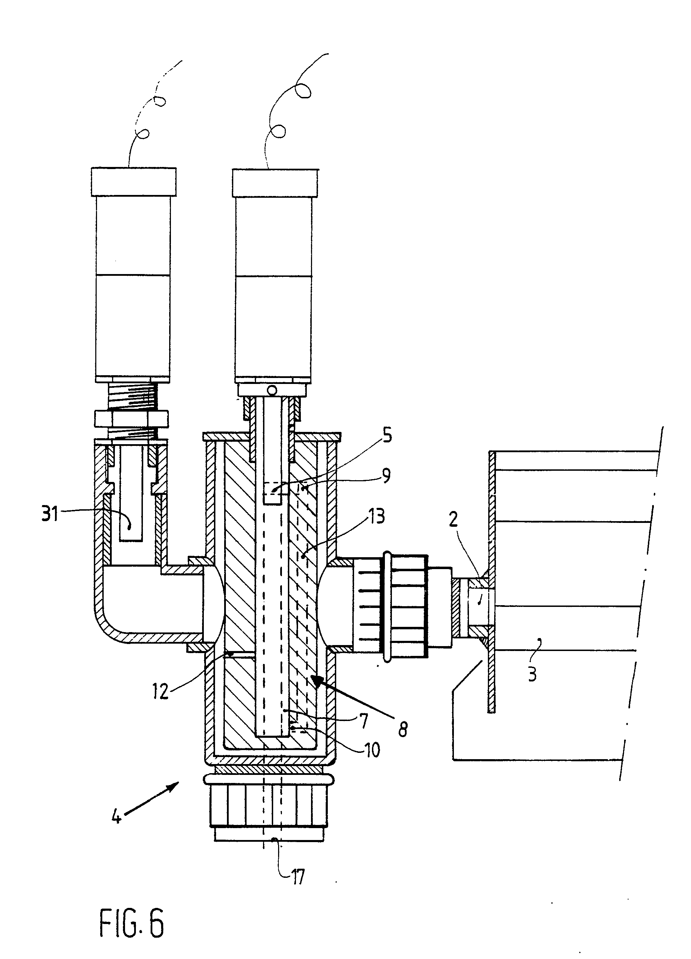

Fig. 6 finally shows a simplified preferred embodiment of the present invention in which buffer reservoir 11 is omitted. The overflow opening 2 is arranged at a lower level than turning point 9 of siphon 8, which turning point is located at a level corresponding with a given liquid level in trough 3. Thus, the measuring means communicates with trough 3 through overflow opening 2, said trough likewise functioning as a buffer reservoir, whereby a temporary excess of liquid is taken up by a temporarily raised liquid level. The throttle opening 12 ensures that the liquid supply to reservoir 7 of the measuring means 4 is less than the discharge during siphoning, so that siphon 8 stops after discharge of a given quantity of liquid. Only when, after reservoir 7 has been filled, the liquid level in trough 3 is higher than the level at which turning point 9 is located, will the siphon again be actuated.

## Claims

1. A method of automatically watering plants arranged on a substrate to which liquid can be supplied through at least one valved supply conduit, at least one substrate being arranged in a receptacle communicating with a trough, while feelers signal to a control device when given liquid levels are reached, with the watering taking place cyclically at timed intervals and in excess quantities, characterized by measuring how much liquid flows from the trough during a watering cycle and controlling the period of time the valves remain open, after a "full" signal has been received, depending on the measured excess of liquid flowing from the trough during one or more of the preceding cycles.

2. A method as claimed in claim 1, characterized in that the quantity of liquid flowing from the trough is measured in steps.

3. A method as claimed in claim 2, characterized in that the stepwise measurement is effected by siphoning a given quantity of liquid through two risers from two separated sections of a reservoir, the second reservoir section being filled by overflow from the first section, wherein the liquid is supplied first, said sections, risers and liquid supply openings being arranged in such a manner that the second section is always siphoned off earlier than the first section and that the siphoning from the first section takes place at a higher speed than the supply of liquid thereto.

4. An apparatus for automatically watering plants arranged on a substrate received in a receptacle, said apparatus comprising supply conduits having valves, said receptacle communicating with a trough having feelers which are coupled to a control device for controlling the liquid level in the trough and which is provided with an overflow opening, characterized in that the overflow opening (2) connects to a measuring means (4) coupled to the control device (6) adapted to control the valves depending on the measured quantities of liquid flowing through the overflow opening (2).

5. An apparatus for automatically watering plants as claimed in claim 4, characterized in that the measuring means (4) comprises a reservoir (7) containing at least one feeler (5) coupled to the control device (6), and a siphon (8) having a turning point (9) and an inlet opening (10) between which there is provided a given difference in level.

6. An apparatus as claimed in claim 5, characterized in that the reservoir comprises a first and a second section (14, 15) separated by at least one partition (18) and an upper section (16) adjoining said sections (14, 15) and forming an interconnection between them, a supply opening terminating in the first section and each of said sections (14, 15) having inlet openings (10', 10") of risers (13', 13"), which at a turning point (9) jointly terminate in a single downcomer (17), while the levels at which the inlet openings (10', 10") are arranged define the respective under-sides of sections (14, 15), the turning point having a higher location than the top of the partitioned sections (14, 15) and the assembly of sections (14, 15), risers (13', 13") and inlet openings (10', 10") being arranged in such a manner that the second section (15) will always be siphoned off earlier than the first section (14) and that the discharge of liquid from the first section (14) by siphoning action takes place more quickly than the supply of liquid to said reservoir section.

7. An apparatus as claimed in claim 6, characterized in that the first section (14) has a larger volume than the second section (15).

8. An apparatus as claimed in claim 6 or 7, characterized in that the area of the smaller passage between the first section (14) and the turning point (9) of the siphon (8) is smaller than the area of the smaller passage between the second section (15) and the turning point (9) of siphon (8).

9. An apparatus as claimed in any of claims 4-8, characterized in that the measuring means (4) comprises a monolithic piece of synthetic plastics material integrating the siphon (8) and the reservoir.

10. An apparatus for automatically watering plants as claimed in claim 4, characterized in that between the measuring means (4) and the overflow opening (2) there is provided a buffer reservoir (11) communicating through throttle opening (12) with the reservoir (7) of the measuring means (4).

11. An apparatus as claimed in any of claims 4-10, characterized in that the overflow opening (2) is located at a lower level than the turning point (9) of the siphon (8) and that the trough (3) functions at the same time as a buffer reservoir.

FIG.1

FIG. 4

FIG.2

FIG. 3

FIG.5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 026 827 (L. RIDER) <br> * complete document * <br> --- | 1 | A 01 G 9/24 <br> A 01 G 25/16 |
| A | DE-A-2 818 358 (L.C. KESTINGG et al.) <br> * claims, figure * <br> --- | 1 | |
| A | DE-A-1 924 305 (F. FILSER) <br> * claims, figure * <br> ----- | 1 | |

TECHNICAL FIELDS SEARCHED (Int. Cl.4)

A 01 G 9/00
A 01 G 25/00

The present search report has been drawn up for all claims

| Place of search | Date of completion of the search | Examiner |
|---|---|---|
| BERLIN | 27-04-1988 | WUNDERLICH J E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)